# EUROPÄISCHE PATENTSCHRIFT

(11) **EP 1 623 627 B1**
(45) Veröffentlichungstag und Bekanntmachung des Hinweises auf die Patenterteilung: **18.10.2006**
(21) Anmeldenummer: 04018708.0
(22) Anmeldetag: 06.08.2004
(51) Int. Cl.: A22C 11/02

(54) **Verfahren und Vorrichtung zum Erkennen von Wursthüllenplatzern und/oder einem Wursthüllenende bei der Wurstproduktion**
Method and device for detecting burst and/or depletion of a sausage casing during sausage production
Méthode et dispositif de détection de l'éclatement et/ou de l'épuisement d'un boyau de saucisse pendant la production de saucisses

(43) Veröffentlichungstag der Anmeldung: 08.02.2006
(73) Patentinhaber: Albert Handtmann Maschinenfabrik GmbH & Co. KG, 88400 Biberach (DE)
(72) Erfinder: Miller, Lothar, 88483 Burgrieden-Rot (DE); Schrader, Wolfgang, 88400 Biberach (DE); Willburger, Peter, 88255 Baindt (DE)
(74) Vertreter: Grünecker, Kinkeldey, Stockmair & Schwanhäusser Anwaltssozietät

(56) Entgegenhaltungen:
- EP-A- 0 750 240
- US-A- 4 017 941
- US-A- 4 257 146
- US-A- 4 434 529
- US-A- 4 606 379

## Beschreibung

Die Erfindung betrifft ein Verfahren bzw. eine Vorrichtung zum Erkennen von Wursthüllenplatzem und/oder einem Wursthüllenende gemäß den Oberbegriffen der Patentansprüche 1 und 9.

Aus der EP 0750 240 ist bereits ein solches Verfahren und eine solche Vorrichtung bekannt. Hier wird zum Erkennen von metallischen Aufklebem auf Wursthüllen ein Elektrodenpaar vorgesehen, das erkennt, ob aufgrund des metallischen Aufklebers eine leitfähige Verbindung zwischen den Elektroden besteht.

Bei der Wurstproduktion wird eine schlauchförmige Wursthülle mit Wurstmasse befüllt, wobei die Wurstmasse aus einem Füllrohr in die Wursthülle hineingedrückt wird. Ein Vorrat an Wursthülle wird über das Füllrohr oder eine darauf angeordnete Hülse gezogen und gerafft (als so genannte Darmraupe), wobei die Falten der gerafften Hülle beim Füllen auseinander gezogen werden, so dass anschließend die Hülle glatt und eben das Füllgut umgibt. Insbesondere bei der Verwendung von Naturdärmen treten im Bereich des Füllrohrendes so genannte Wursthüllenplatzer bzw. Darmplatzer auf, die eine Unterbrechung der Wurstproduktion erzwingen. Derartige Wursthüllenplatzer müssen vom Bediener visuell oder durch Fühlen erkannt werden. Der Bediener muss dann möglichst schnell die Maschine stoppen. Dies bedingt, dass der Bediener ständig den Produktionsprozess beobachtet. Wenn ein Wursthüllenplatzer bzw. Darmplatzer zu spät erkannt wird, verschmutzt die Maschine stark und muss wieder zeitaufwändig gereinigt werden. Auch zur Erkennung des Wursthüllenendes muss der Bediener den Vorgang ständig überwachen. Bei der Verwendung von Naturdärmen werden überlappende Darmstücke auf dem Füllrohr angeordnet, die bei der Befüllung auseinander gezogen werden können, so dass ein exaktes Überwachen des Naturdarmendes notwendig ist. Insbesondere sollte das Darmende rechtzeitig erkannt werden, bevor es über das offene Ende des Füllrohrs abgezogen wird.

Es wurden bereits unterschiedliche Lösungen vorgeschlagen, bei denen Darmplatzer mit mechanischen Teilen erfasst werden können. Der Zustand dieser mechanischen Taster wird mit Sensoren und einer elektronischen Steuerung ausgewertet. Diese Systeme arbeiten jedoch sehr unzuverlässig, sind kompliziert und teuer.

In der Druckschrift DE 10015893 wurde bereits eine Lösung mit Abstandsensor- und Frequenzanalyse vorgeschlagen. Auch dieses System ist relativ kompliziert und kostenintensiv. Bislang konnte kein vorgeschlagenes Verfahren Darmplatzer bzw. Darmenden einfach und zuverlässig ermitteln. Insbesondere kann keines der bekannten Verfahren den gesamten Anwendungsbereich zuverlässig abdecken. Insbesondere bei Änderungen der Produktionsparameter, wie etwa Füllgeschwindigkeit, Durchmesser, Darmart, sind umfangreiche Anpassungsarbeiten (z.B. durch Teach-in) nötig.

Hiervon ausgehend liegt der vorliegenden Erfindung die Aufgabe zugrunde, ein einfaches und zuverlässiges Verfahren bzw. eine Vorrichtung bereitzustellen, die es auf einfache und zuverlässige Art und Weise ermöglichen, Wursthüllenplatzer und/oder Wursthüllenende beim Befüllen einer Wursthülle mit pastösem Gut festzustellen.

Erfindungsgemäß wird diese Aufgabe durch die Merkmale der Patentansprüche 1 und 9 gelöst. Vorteilhafte Ausführungsformen sind in den Unteransprüchen gezeigt.

Das erfindungsgemäße Messverfahren beruht auf der Tatsache, dass sich eine elektrische Kenngröße, wie beispielsweise der elektrische Widerstand bzw. Leitwert zwischen dem Fühlerkontakt und dem Füllrohr ändert, wenn die Wursthülle platzt oder wenn ein Darmende erreicht ist. Platzt die Wursthülle, so nimmt beispielsweise der ermittelte elektrische Widerstand, der mit Wursthülle mindestens 1000 Ω beträgt, drastisch auf z.B. <100 Ω ab, so dass aufgrund dieses Messwertes bestimmt werden kann, ob ein Wursthüllenplatzer und/oder -ende vorhanden ist oder nicht. Das erfindungsgemäße Verfahren bzw. die erfindungsgemäße Vorrichtung kann auf einfache Art und Weise kostengünstig realisiert werden und ermöglicht darüber hinaus, dass bereits vorhandene Anlagen auf einfache Art und Weise nachgerüstet werden können. Das erfindungsgemäße Verfahren bzw. die erfindungsgemäße Vorrichtung müssen nicht an geänderte Produktionsparameter angepasst werden. Vorteilhafterweise ist dazu ein Fühlerkontakt vorgesehen, der auf der Wursthülle aufliegt, wobei zwischen dem Fühlerkontakt und dem Füllrohr dann eine Spannung anliegt.

Erfindungsgemäß kann die elektrische Kenngröße ein Widerstand, eine Spannung oder eine Stromstärke sein. Das bedeutet, dass entweder direkt eine Widerstandsmessung der Wursthülle auf dem Füllrohr durchgeführt wird, oder aber der Spannungsabfall bzw. der Strom durch die Wursthülle auf das Füllrohr ermittelt wird.

Die angelegte Spannung kann eine Mess-Gleichspannung (+U) oder eine Mess-Wechselspannung sein.

Wird eine Mess-Wechselspannung angelegt, so können eventuell auftretende Elektrolyseeffekte zwischen einem Fühlerkontakt und dem Füllrohr bzw. zwischen Füllrohr und Maschine wirkungsvoll verhindert werden. Durch die Auswahl einer geeigneten Frequenz bzw. Wellenform dieser Wechselspannung kann zudem die Erkennungssicherheit verbessert werden.

Der Fühlerkontakt kann entweder an einer Stelle in Ausstoßrichtung hinter einer Darmbremse die elektrische Kenngröße abtasten und/oder an einer Stelle vor der Darmbremse. Wird der Fühlerkontakt in Ausstoßrichtung hinter der Darmbremse angeordnet, so kann in zuverlässiger Art und Weise ein Wursthüllenplatzer erkannt werden. Soll hingegen das Wursthüllenende erkannt werden, so ist es vorteilhaft, den Fühlerkontakt vor der Darmbremse anzuordnen, so dass das Ende des Darmes frühzeitig erkannt werden kann.

In vorteilhafter Weise wird beispielsweise über einen Spannungsteiler als elektrische Kenngröße eine Spannung ermittelt, die zwischen Fühlerkontakt und Füllrohr abfällt. Die technische Realisierung einer derartigen Spannungsmessung ist einfacher als die direkte Widerstandsmessung.

Gemäß der vorliegenden Erfindung kann dann in einer Auswerteeinheit die elektrische Kenngröße mit einem Schwellwert verglichen werden. Wenn die erfasste elektrische Kenngröße dann einen Schwellwert über- bzw. unterscheitet kann ein Stoppsignal erzeugt werden, das den Befüllvorgang stoppt, so dass es zu keinen Verschmutzungen kommt.

Wenn erfasst wird, dass die elektrische Kenngröße ein unendlich großer Widerstand bzw. eine entsprechende Spannung oder ein entsprechender Strom ist, wird ein Signal ausgegeben, das anzeigt, dass ein Fühlerkontaktfehler vorliegt.

Bei einer erfindungsgemäßen Vorrichtung ist der Fühlerkontakt vorzugsweise als Schleifkontakt ausgebildet, so dass sich die in Ausschubrichtung bewegende Wursthülle unter dem Fühlerkontakt bewegen kann und sich darüber hinaus das Füllrohr unter dem Kontakt drehen kann, ohne die Wursthülle zu beschädigen.

Wenn die Vorrichtung ein geerdetes Maschinengestell aufweist, wobei das Füllrohr in leitendem Kontakt zum Maschinengestell steht, kann das negative Potenzial des Maschinengestells als Bezugspotenzial für die Messspannung dienen. Dies bringt den Vorteil mit sich, dass die Sensoreinrichtung lediglich eine Leitung zum Fühlerkontakt hin benötigt, während die Masserückleitung vom Füllrohr gespart werden kann, da die Masseführung über das Maschinengestell erfolgt.

Wenn jedoch das Füllrohr nicht in leitendem Kontakt zum Maschinengestell steht, ist eine Masserückleitung am Füllrohr notwendig, so dass ein weiterer leitender Kontakt vorzugsweise Schleifkontakt zum Füllrohr notwendig ist.

Vorteilhafterweise weist die Vorrichtung weiter eine Anzeige auf, die anzeigt, ob eine Wursthülle in Ordnung ist oder nicht, und zwar in Abhängigkeit der gemessenen elektrischen Kenngröße.

Die vorliegende Erfindung ermöglicht die einfache Verwendung einer Sensoreinrichtung zum Messen einer elektrischen Kenngröße mit einem entsprechenden Fühlerkontakt für die Wursthülle auf einem Füllrohr, um so auf einfache Art und Weise Wurstplatzer bzw. Darmende festzustellen.

Die vorliegende Erfindung wird nachfolgend unter Bezugnahme der beiliegenden Zeichnungen näher erläutert.
- Fig. 1: zeigt schematisch einen Schnitt durch eine Vorrichtung gemäß einem ersten Ausführungsbeispiel der vorliegenden Erfindung.
- Fig. 2: zeigt schematisch einen Schnitt durch eine weitere Ausführungsform der vorliegenden Erfindung.
- Fig. 3: zeigt ein Ersatzschaltbild für die Spannungsmessung in der in Fig. 2 gezeigten Vorrichtung.
- Fig. 4: zeigt einen Schnitt durch eine Vorrichtung gemäß einem dritten Ausführungsbeispiel der vorliegenden Erfindung.
- Fig. 5: zeigt einen Signalzeitplan, der das Messsignal in Abhängigkeit der Zeit darstellt.

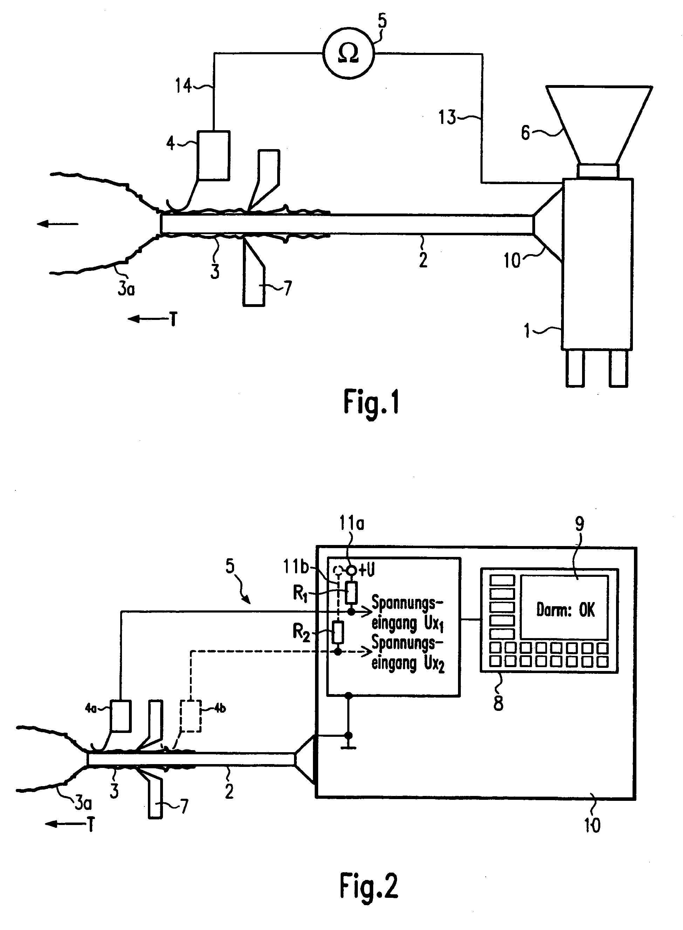

Fig. 1 zeigt eine erste Ausführungsform der vorliegenden Erfindung. Wie aus Fig. 1 hervorgeht, umfasst die erfindungsgemäße Vorrichtung eine Fülleinheit 1 mit einem entsprechenden Trichter 6 und einem Füllrohr 2 sowie einer Darmbremse 7 zum Befüllen einer Wursthülle 3 mit pastösem Gut, z.B. einer Wurst mit Wurstbrät. Das Füllrohr 2 ist über einen nicht näher dargestellten Füllrohrdrehantrieb, der an einem Maschinengestell 10 befestigt ist, um seine Längsachse drehbar gelagert. Das Füllrohr 2 weist in bekannter Weise eine Darmbremse 7 mit einem entsprechendem Bremsring auf, durch die die auf dem Füllrohr 2 geraffte Wursthülle 3 durch den Füllgutausstoß abgezogen wird. Die Darmbremse 7 bzw. deren Bremsring kann über ein Bremsringgetriebe synchronisiert mit dem Füllrohr 2 drehend angetrieben werden. Das Bremsringgetriebe kann so verschwenkt werden (nicht dargestellt), dass das Ende des Füllrohrs 2 zum Aufziehen einer neuen Wursthülle 3 oder zum Reinigung freigelegt wird.

Im Betrieb wird pastöses Gut in bekannter Weise in Transportrichtung T durch das Füllrohr 2 in die Wursthülle 3 gedrückt. Der gefüllte Wurststrang 3a wird dann über eine nicht gezeigte Transporteinrichtung, wie beispielsweise einer Längeneinheit mit Transportbändem in Richtung T mit einer bestimmten Geschwindigkeit vom Füllrohr 2 abgezogen.

Gemäß der vorliegenden Erfindung weist die Vorrichtung weiter eine Sensoreinrichtung 5 auf zum Erfassen einer elektrischen Kenngröße Rₓ, Uₓ, Iₓ für die auf dem Füllrohr 2 aufgezogene geraffte Wursthülle 3. In diesem Ausführungsbeispiel umfasst die Sensoreinrichtung 5 ein Ohmmeter zur Bestimmung des elektrischen Widerstandes Rₓ für die auf dem Füllrohr aufgezogene Wursthülle. Als elektrische Kenngröße muss jedoch nicht der elektrische Widerstand der Wursthülle gemessen werden, sondem es kann auch, wie nachfolgend im Zusammenhang mit Fig. 2 näher erläutert wird, ein Spannungsabfall an der Wursthülle auf dem Füllrohr als Kenngröße bestimmt werden. Die Sensoreinrichtung 5 ist mit einer entsprechenden Leitung 14 mit einem Fühlerkontakt 4 verbunden, der auf der gerafften Wursthülle 3 auf dem Füllrohr 2 aufliegt. Der Fühlerkontakt 4 ist hier als Schleifkontakt ausgebildet, so dass sich die geraffte Wursthülle unter dem Schleifkontakt 4 in Transportrichtung T hindurch bewegen kann. Außerdem kann sich das Füllrohr 2 unter dem Fühlerkontakt 4 um seine Längsachse drehen. Dazu ist der Fühlerkontakt 4 federnd ausgebildet. Der Fühlerkontakt 4 kann beispielsweise ein Stahlfederkontakt sein oder aus einem leitenden Kunststoff geformt sein. Bei diesem Ausführungsbeispiel ist der Fühlerkontakt 4 in Transportrichtung T, d.h. in Ausstoßrichtung des Füllguts, hinter der Darmbremse 7 angeordnet und eignet sich daher besonders gut zum Erkennen von Darmplatzern, die insbesondere an dem den Füller 1 abgewandten Ende des Füllrohrs 2 auftreten. Aus diesem Grund befindet sich der Fühlerkontakt 4 vorzugsweise in diesem Endbereich. Die Sensoreinrichtung 5 weist weiter eine Leitung 13 zum geerdeten Maschinengestell 10 auf, das in leitendem Kontakt zum Füllrohr 2 steht. Weil das Füllrohr 2 leitenden Kontakt zum Maschinengestell 10 hat, kann auf einen weiteren Schleifkontakt auf dem Füllrohr 2 verzichtet werden, da das Maschinengestell als Bezugspotenzial für die Messung verwendet wird.

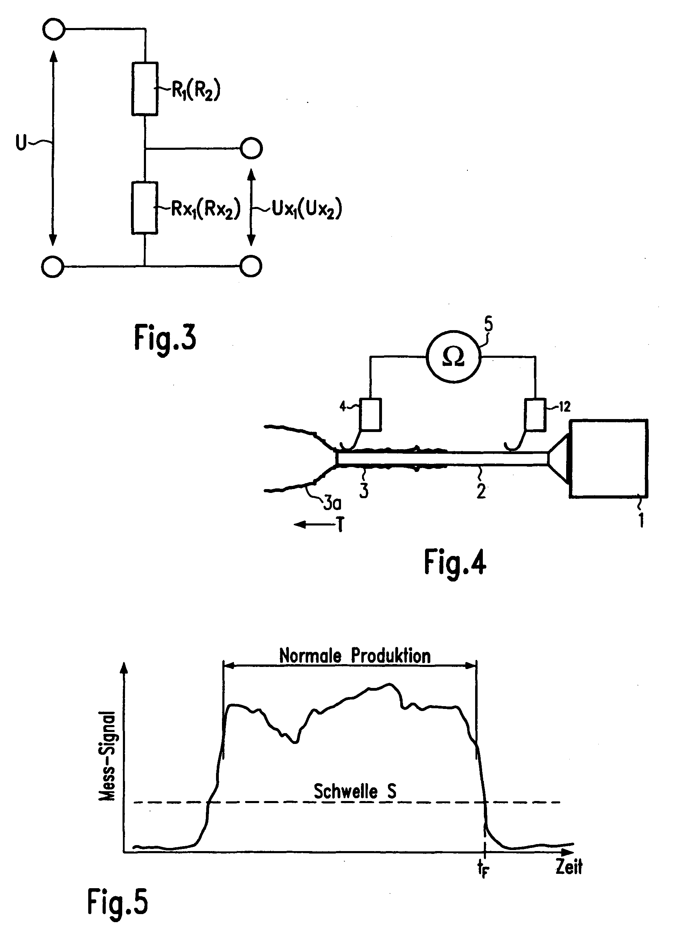

Ist das Füllrohr 2 elektrisch isoliert, so muss das Füllrohr 2 über einen weiteren Kontakt 12, hier einen zweiten Schleifkontakt 12, mit der Sensoreinrichtung 5 verbunden werden, wie in Fig. 4 dargestellt.

Es ist hier vorteilhaft, auch hier einen Schleifkontakt zu verwenden, da sich das Füllrohr 2 um seine Längsachse drehen kann, so dass keine feste Verbindung zum Füllrohr 2 möglich ist. Zum Messen der elektrischen Kenngröße der Wursthülle 3 wird gemäß der vorliegenden Erfindung eine Spannung zwischen Fühlerkontakt 4 und Füllrohr 2 angelegt.

Das Messverfahren beruht darauf, dass sich die gemessene elektrische Kenngröße für die auf dem Füllrohr aufgezogene Wursthülle bei Wursthüllenplatzem oder einem Wursthüllenende ändert. Beispielsweise weist eine Wursthülle 3, z.B. hier ein Naturdarm, einen elektrischen Widerstand von mindestens etwa 1000 Ω auf. Eine Messung des Widerstands mit der in Fig. 1 gezeigten Sensoreinrichtung 5 würde zu einem Messergebnis von etwa 1000 Ω bei intakter Wursthülle 3 führen. Im Gegensatz dazu führt der direkte Kontakt des Messfühlers 4 zum Füllrohr 2 zu einem wesentlich geringeren Widerstand von <100 Ω. Das bedeutet, dass durch Erfassen einer elektrischen Kenngröße für die Wursthülle, wie etwa den elektrischen Widerstand oder einer entsprechenden Spannung oder Stromstärke, eine Aussage darüber gemacht werden kann, ob eine Wursthülle vorhanden ist oder nicht, oder ob ein Wursthüllenplatzer vorliegt oder nicht.

Die Vorrichtung kann weiter eine in Fig. 1 nicht näher dargestellte Auswerteeinheit 8 aufweisen, in der ein Schwellwert S eingegeben werden kann. Da der Wert der Kenngröße (Uₓ, Rₓ, Iₓ) von der Beschaffenheit der Wursthülle und anderen Parametern abhängt, kann der Schwellwert S vom Maschinenbediener manuell der aktuellen Situation angepasst werden.
Alternativ kann der Schwellwert S während der Produktion aus den dabei laufend gewonnenen Werten der Kenngröße in der Steuerung durch einen Algorithmus berechnet und so automatisch der aktuellen Situation angepasst werden. Dieses selbstlernende adaptive Verfahren entbindet den Maschinenbediener weitgehend von Anpassungsarbeiten. Dadurch sollen Fehlerkennungen verhindert oder zumindest reduziert werden.

Fig. 5 zeigt einen Signal-Zeitplan, der das Messsignal, hier beispielsweise den ermittelten Widerstand Rₓ, in Abhängigkeit der Zeit t zeigt. Liegt das Messsignal oberhalb der Schwelle S, so stellt die Auswerteeinheit 8 fest, dass die Produktion normal verläuft, wobei kein Wursthüllenplatzer vorliegt und auch kein Wursthüllenende. Fällt zum Zeitpunkt t_{F} das Messsignal unter die Schwelle S ab, so erkennt die Auswerteeinheit 8 eine Störung, d.h., z.B. einen Wursthüllenplatzer oder ein Wursthüllenende. Die Auswerteeinheit 8 kann dann ein entsprechendes Signal an die nicht dargestellte Steuerung des Füllers 1 geben, die wiederum den Befüllungsvorgang umgehend stoppt. Somit ist sichergestellt, dass bei Störungen kein weiteres Füllgut mehr austritt und somit eine Verschmutzung der Maschine verhindert wird. Die Spannung, die zur Messung der elektrischen Kenngröße angelegt wird, kann eine Gleichspannung sein oder aber auch eine Mess-Wechselspannung. Die Verwendung einer Wechselspannung kann eventuell auftretende Elektrolyseeffekte zwischen Fühlerkontakt 4 und Füllrohr 2 bzw. zwischen Füllrohr 2 und Maschinengestell 10 wirkungsvoll verhindern. Darüber hinaus kann die Auswahl einer geeigneten Frequenz bzw. Wellenform dieser Wechselspannung die Erkennungssicherheit eines Störfalls verbessern.

Wird eine Störung festgestellt, kann dies darüber hinaus in einer entsprechenden Anzeige 9 (siehe Fig. 2) angezeigt werden.

Wird von der Sensoreinrichtung 5 ein unendlich großer Widerstand, z.B. >>100 kΩ, festgestellt, so stellt die Auswerteeinrichtung 5 fest, dass ein Sensoreinrichtungsfehler vorliegt, d.h. beispielsweise ein beschädigter Fühlerkontakt 4. Es kann eine entsprechende Fehlermeldung auf der Anzeige 9 erfolgen.

Fig. 2 zeigt ein weiteres Ausführungsbeispiel der vorliegenden Erfindung, das im Wesentlichen dem in der Fig. 1 gezeigten Ausführungsbeispiel entspricht, wobei die Änderung des Widerstandwertes zwischen Fühlerkontakt 4a und Füllrohr 2 über eine entsprechende Änderung des Spannungsabfalls gemessen wird. Bei der technischen Realisierung ist die Messung eines Spannungswertes Uₓ einfacher als eine direkte Widerstandsmessung. Wie aus der Fig. 2 hervorgeht, wird hier zwischen dem Füllrohr 2, das in leitendem Kontakt zum Maschinengestell 10 steht, das wiederum geerdet ist, und dem Fühlerkontakt 4a über einen bekannten Widerstand R₁ eine Messspannung U angelegt. Hier ist das Füllrohr wie erwähnt leitend mit dem Maschinengestell verbunden, es ist jedoch ebenfalls möglich, einen weiteren Schleifkontakt 12, wie in Zusammenhang mit Fig. 4 näher erläutert wurde, anzuordnen. Wie aus dem Ersatzschaltbild, das in Fig. 3 gezeigt ist, hervorgeht, kann die Spannung Uₓ₁ abgegriffen werden, die zwischen dem Fühlerkontakt 4a, der gerafften Wursthülle 3 und dem Füllrohr 2 abfällt. Da der Widerstandswert des Fühlerkontakts 4, des Füllrohrs 2 und der entsprechenden Leitungen gering ist (da diese leitend ausgebildet sind), und da diese Werte darüber hinaus konstante Größen sind, können sie für die Beurteilung der Änderung der zu ermittelnden elektrischen Kenngröße vernachlässigt werden. Das bedeutet, dass die abgegriffene Spannung Uₓ₁ in einem arithmetischen Bezug zum elektrischen Widerstand der Wursthülle 3 steht, d. h. Uₓ₁ = U * Rₓ₁ / (Rₓ₁ + R₁). Die Spannung Uₓ₁ wird dann an die Auswerteeinheit 8 weitergeleitet, die das entsprechende Messsignal, wie zuvor in Zusammenhang mit Fig. 5 erläutert, mit einem bestimmten Schwellwert S vergleicht, wobei, wie zuvor beschrieben, bei einer Abweichung des Messsignals von dem Schwellwert S die Auswerteeinheit 8 ermittelt, dass eine Störung vorliegt. Liegt beispielsweise ein Wursthüllenplatzer oder ein Wursthüllenende vor, so steht der Fühlerkontakt 4a zumindest kurzzeitig in direktem Kontakt zum Füllrohr 2, so dass der Widerstandswert bzw. die abfallende Spannung Uₓ₁ einem Wert entspricht, der sich aus dem Widerstandswert des Fühlerkontakts 4a und des Füllrohrs 2 sowie der entsprechenden Leitungen ergibt und somit deutlich geringer ist als entsprechende Werte bei intakter Wursthülle.

Der Fühlerkontakt 4a ist, wie aus Fig. 2 hervorgeht, in Transportrichtung T hinter der Darmbremse 7 angeordnet, und ist somit, wie zuvor beschrieben, insbesondere zum Erfassen von Wursthüllenplatzem geeignet. Alternativ dazu oder zusätzlich kann ein Fühlerkontakt 4b vorgesehen werden, der in Transportrichtung T vor der Darmbremse 7 angeordnet ist, und ebenso wie der zuvor beschriebene Fühlerkontakt 4a aufgebaut ist. Ein Fühlerkontakt 4b, der vor der Darmbremse 7 angeordnet ist, eignet sich insbesondere zum rechtzeitigen Erkennen des Wursthüllenendes. Ebenso wie bei dem Fühlerkontakt 4a wird auch hier über einen bekannten Widerstand R₂ eine Messspannung U zwischen Fühlerkontakt 4b und Füllrohr 2 angelegt. Die abgegriffene Spannung Uₓ₂ steht ebenso, wie zuvor erläutert, zu dem elektrischen Widerstand der Wursthülle 3 in Beziehung, wobei sich auch hier ergibt Uₓ₂ = U * Rₓ₂ / (Rₓ₂ + R₂).

Werden zwei Fühlerkontakte 4a, 4b verwendet, so beurteilt die Auswerteeinheit 8, dass ein Wursthüllenende erreicht ist, wenn die elektrische Kenngröße Uₓ₂, die über den Fühlerkontakt 4b ermittelt wird, unter die Schwelle S₂ abfällt, und dass ein Darmplatzer vorliegt, wenn die von dem Fühler 4a ermittelte elektrische Kenngröße Uₓ₁ unter einen Schwellwert S₁ abfällt. Die Schwellwerte für die Fühler 4a und 4b müssen nicht gleich sein. Dies kann z. B. herrühren aus einem unterschiedlichen mechanischen Aufbau auf Grund von geometrischen Gegebenheiten. In jedem Fall gibt dann die Auswerteeinheit 8 ein entsprechendes Signal an die Maschinensteuerung, um den Befüllungsvorgang zu stoppen. Eine entsprechende Anzeige erfolgt an der Anzeige 9.

Wird von der Auswerteeinheit 8 ein unendlich hoher Durchgangswiderstand >>100 kΩ bzw. ein entsprechender Spannungs- oder Stromwert festgestellt, so stellt die Auswerteeinheit 8 fest, dass ein Fehler an dem entsprechenden Fühlerkontakt 4a oder 4b oder gegebenenfalls 12 vorliegt und gibt ein entsprechendes Signal zur Anzeige dieses Fehlers auf der Anzeigeeinheit 9 aus.

Gemäß der vorliegenden Erfindung kann somit durch Erfassen einer elektrischen Kenngröße (Uₓ, Rₓ, Iₓ), die arithmetisch zum Widerstand der Wursthülle 3 in Beziehung steht, ermittelt werden, um so auf der Grundlage dieser Widerstandsänderung ein entsprechendes Signal auszugeben, das anzeigt, ob ein Wursthüllenplatzer vorliegt und/oder ein Signal auszugeben, dass anzeigt, dass ein Wursthüllenende vorliegt.

## Patentansprüche

1. Verfahren zum Erkennen von Wursthüllenplatzem und/oder einem Wursthüllenende beim Befüllen einer Wursthülle (3) mit pastösem Gut, das von einem Füllrohr (2) ausgestoßen wird, mit folgenden Schritten:
Erfassen einer elektrischen Kenngröße (Uₓ, Rₓ, Iₓ) für die auf dem Füllrohr (2) aufgezogene Wursthülle (3),
Ermitteln, ob ein Wursthüllenplatzer und/oder ein Wursthüllenende vorliegt auf der Grundlage dieser elektrischen Kenngröße (Uₓ, Rₓ, Iₓ),
**dadurch gekennzeichnet, dass**
zum Erfassen der elektrischen Kenngröße (Uₓ, Rₓ, Iₓ) ein elektrisch leitender Fühlerkontakt (4) auf der Wursthülle (3) aufliegt, und zwischen Fühlerkontakt (4) und Füllrohr (2) eine Spannung (U) angelegt wird.

2. Verfahren nach Anspruch 1,
**dadurch gekennzeichnet, dass**
die elektrische Kenngröße ein Widerstand (Rₓ), eine Spannung (Uₓ) oder eine Stromstärke (Iₓ) ist.

3. Verfahren nach Anspruch 2,
**dadurch gekenntzeichnet, dass**
die Spannung (U) eine Gleichspannung oder eine Wechselspannung ist.

4. Verfahren nach Anspruch 2 oder 3,
**dadurch gekennzeichnet, dass**
der Fühlerkontakt (4) an einer Stelle in Ausstoßrichtung hinter einer Darmbremse (7) die elektrische Kenngröße abtastet und/oder an einer Stelle vor der Darmbremse (7).

5. Verfahren nach mindestens einem der Ansprüche 1-4.
**dadurch gekennzeichnet, dass**
als elektrische Kenngröße (Uₓ, Rₓ, Iₓ) eine Spannung ermittelt wird, die am Fühlerkontakt (4) der aufgezogenen Wursthülle 3 und Füllrohr (2) abfällt.

6. **Verfahren nach Anspruch 5,**
**dadurch gekennzeichnet, dass**
die erfasste elektrische Kenngröße (Rₓ, Uₓ) mit einem Schwellwert (S) verglichen wird.

7. Verfahren nach Anspruch 6,
**dadurch gekennzeichnet, dass**
wenn die erfasste elektrische Kenngröße (Uₓ, Rₓ, Iₓ) den Schwellwert (S) unter- bzw. überschreitet, ein Stoppsignal erzeugt wird, das den Befüllvorgang stoppt.

8. Verfahren nach mindestens einem der vorhergehenden Patentansprüche,
**dadurch gekennzeichnet, dass**
wenn als elektrische Kenngröße (Uₓ, Rₓ, Iₓ) ein unendlich großer Widerstand (Rₓ) bzw. eine entsprechende Spannung (Uₓ)oder ein entsprechender Strom (Iₓ)ermittelt wird, ein Signal ausgegeben wird, das anzeigt, dass ein Fühlerkontaktfehler vorliegt.

9. Vorrichtung zum Durchführen des Verfahrens nach Anspruch 1, mit einem Füllrohr (2) zum Ausstoß von pastösem Gut in eine Wursthülle (3), umfassend:
eine Sensoreinrichtung (5) zum Erfassen einer elektrischen Kenngröße (Uₓ, Rₓ, Iₓ) für die auf dem Füllrohr (2) aufgezogene Wursthülle (3) und
einer Auswerteeinheit (8), die auf der Grundlage der erfassten Kenngröße (Uₓ, Rₓ, Iₓ) bestimmt, ob ein Wursthüllenplatzer und/oder ein Wursthüllenende vorliegt
**dadurch gekennzeichnet, dass**
die Sensoreinrichtung (5) einen Fühlerkontakt (4) umfasst, der auf der Wursthülle (3) aufliegt, wobei zwischen Fühlerkontakt (4) und Füllrohr (2) eine Spannung angelegt wird.

10. Vorrichtung nach Anspruch 8,
**dadurch gekennzeichnet, dass**
die Sensoreinrichtung (5) derart ausgelegt ist, dass als elektrische Kenngröße ein Wiederstand (Rₓ), eine Spannung (Uₓ) oder ein entsprechender Strom (Iₓ) erfasst werden kann.

11. Vorrichtung nach Anspruch 10,
**dadurch gekennzeichnet, dass**
der Fühlerkontakt (4) an einer Stelle in Ausstoßrichtung hinter einer Darmbremse (7) angeordnet ist und/oder vor der Darmbremse (7).

12. Vorrichtung nach mindestens einem der Ansprüche 10 oder 11,
**dadurch gekennzeichnet, dass**
der Fühlerkontakt (4) als Schleifkontakt ausgebildet ist.

13. Vorrichtung nach einem der Ansprüche 10-12.
**dadurch gekennzeichnet, dass**
die Vorrichtung weiter ein geerdetes Maschinengestell (10) aufweist, das Füllrohr (2) in leitendem Kontakt zum Maschinengestell (10) steht, so dass das negative Potenzial des Maschinengestells (10) als Bezugspotenzial für die Messspannung dient.

14. Vorrichtung nach mindestens einem der Ansprüche 8-13,
**dadurch gekennzeichnet, dass**
die Sensoreinrichtung (5) einen weiteren leitenden Kontakt (12) zum Füllrohr (2) aufweist.

15. Vorrichtung nach mindestens einen der Ansprüche 8 -14,
**dadurch gekennzeichnet, dass**
die Auswerteeinheit (8) ein Stoppsignal ausgibt, das den Befüllvorgang stoppt, wenn ein Wursthüllenplatzer und/oder ein Darmende erfasst wird.

16. Vorrichtung nach mindestens einem der Ansprüche 8 -15,
**dadurch gekennzeichnet, dass**
die Sensoreinrichtung (5) einen Spannungsteiler umfasst, so dass als elektrische Kenngröße die Spannung (Uₓ) ermittelt wird, die am Fühlerkontakt (4) und Füllrohr (2) abfällt.

17. Vorrichtung nach mindestens einem der Ansprüche 8 -16,
**dadurch gekennzeichnet, dass**
die Auswerteeinheit (8) mindestens einen Schwellwert (Sₙ) gespeichert hat, wobei die Auswerteeinheit (8) den elektrischen Kennwert (Uₓ, Rₓ, Iₓ) mit dem Schwellwert (Sₙ) vergleicht.

18. Vorrichtung nach mindestens einem der Ansprüche 13 -17,
**dadurch gekennzeichnet, dass**
die Vorrichtung weiter eine Anzeige (9) umfasst, die anzeigt, ob eine Wursthülle in Ordnung ist oder nicht, und zwar in Abhängigkeit der gemessenen Kenngröße (Uₓ, Rₓ, Iₓ).

## Claims

1. Method for identifying bursts in sausage casings and/or a sausage casing end when filling a sausage casing (3) with paste-like material expelled from a filling tube (2) having the following steps:
measurement of a characteristic electric variable (Uₓ, Rₓ, Iₓ) for the sausage casing (3) pulled onto the filling tube (2),
determining whether there is a burst in the sausage casing and/or a sausage casing end on the basis of this characteristic electric variable (Uₓ, Rₓ, Iₓ),
**characterised in that**
for detecting the characteristic electric variable (Uₓ, Rₓ, Iₓ) an electrically conducting sensor contact (4) rests on the sausage casing (3) and a voltage (U) is applied between the sensor contact (4) and filling tube (2).

2. Method according to claim 1, **characterised in that** the characteristic electric variable is a resistance (Rₓ), a voltage (Uₓ) or a current intensity (Iₓ) .

3. Method according to claim 2, **characterised in that** the voltage (U) is a dc voltage or an ac voltage.

4. Method according to claim 2 or 3, **characterised in that** in the expulsion direction at a point behind a sausage skin brake (7) and/or at a point ahead of the sausage skin brake (7) the sensor contact (4) samples the characteristic electric variable.

5. Method according to at least one of claims 1-4, **characterised in that** for the characteristic electric variable (Uₓ, Rₓ, Iₓ) a voltage is determined which drops off over the sensor contact (4) with the pulled-on sausage casing (3) and filling tube (2).

6. Method according to claim 5, **characterised in that** the detected characteristic electric variable (Rₓ, Uₓ) is compared with a threshold value (S).

7. Method according to claim 6, **characterised in that** if the detected characteristic electric variable (Uₓ, Rₓ, Iₓ) falls below or exceeds the threshold value (S) a stop signal is generated which stops the filling operation.

8. Method according to at least one of the preceding claims, **characterised in that** if an infinitely large resistance (Rₓ) or a corresponding voltage (Uₓ) or a corresponding current (Iₓ) is determined as the characteristic electric variable (Uₓ, Rₓ, Iₓ) a signal is output which indicates that there is a sensor contact error.

9. Device for carrying out the method according to claim 1, having a filling tube (2) for expelling paste-like material into a sausage casing (3) comprising:
a sensor device (5) for measuring a characteristic electric variable (Uₓ, Rₓ, Iₓ) for the sausage casing (3) pulled onto the filling tube (2) and
an evaluation unit (8) which on the basis of the detected characteristic variable (Uₓ, Rₓ, Iₓ) determines whether there is a burst in the sausage casing and/or a sausage casing end,
**characterised in that**
the sensor device (5) comprises a sensor contact (4) which rests on the sausage casing (3), wherein a voltage is applied between the sensor contact (4) and filling tube (2).

10. Device according to claim 8 [sic], **characterised in that** the sensor device (5) is designed in such a way that for the characteristic electric variable a resistance (Rₓ), a voltage (Uₓ) or a corresponding current (Iₓ) can be measured.

11. Device according to claim 10, **characterised in that** the sensor contact (4) is arranged at a point in the expulsion direction behind a sausage skin brake (7) and/or ahead of the sausage skin brake (7).

12. Device according to at least one of claims 10 or 11, **characterised in that** the sensor contact (4) is constructed in the form of a wiping contact.

13. Device according to any of claims 10-12, **characterised in that** the device further comprises an earthed machine frame (10), the filling tube (2) is in conducting contact with the machine frame (10) so that the negative potential of the machine frame (10) serves as reference potential for the measured voltage.

14. Device according to at least one of claims 8-13, **characterised in that** the sensor device (5) has another conducting contact (12) to the filling tube (2).

15. Device according to at least one of claims 8-14, **characterised in that** the evaluation unit (8) outputs a stop signal to stop the filling operation when a sausage casing burst and/or a sausage skin end is detected.

16. Device according to at least one of claims 8-15, **characterised in that** the sensor device (5) comprises a voltage divider so that for the characteristic electric variable the voltage (Uₓ) is determined which drops off over the sensor contact (4) and filling tube (2).

17. Device according to at least one of claims 8-16, **characterised in that** the evaluation unit (8) has stored in memory at least one threshold value (Sₙ), wherein the evaluation unit (8) compares the characteristic electric value (Uₓ, Rₓ, Iₓ) with the threshold value (Sₙ).

18. Device according to at least one of claims 13-17, **characterised in that** the device further comprises a display (9) which displays whether a sausage casing is or is not in good working order and does this as a function of the measured characteristic variable (Uₓ, Rₓ, Iₓ).

## Revendications

1. Procédé pour détecter des éclatements d'enveloppe de saucisse et/ou une fin d'enveloppe de saucisse lors du remplissage d'une enveloppe de saucisse (3) avec de la substance pâteuse qui est expulsée d'un tube de remplissage (2), comportant les étapes suivantes :
capter une grandeur caractéristique électrique (Uₓ, Rₓ, Iₓ) pour l'enveloppe de saucisse (3) enfilée sur le tube de remplissage (2),
déterminer s'il existe un d'éclatement d'enveloppe de saucisse et/ou une fin d'enveloppe de saucisse sur la base de cette grandeur caractéristique électrique (Uₓ, Rₓ, Iₓ),
**caractérisé en ce que**
pour capter la grandeur caractéristique électrique (Uₓ, Rₓ, Iₓ), un- contact de palpeur (4) électriquement conducteur repose sur l'enveloppe de saucisse (3), et une tension (U) est appliquée entre le contact de palpeur (4) et le tube de remplissage (2).

2. Procédé selon la revendication 1,
**caractérisé en ce que**
la grandeur caractéristique électrique est une résistance (Rₓ), une tension (Uₓ) ou une intensité de courant (Iₓ).

3. Procédé selon la revendication 2,
**caractérisé en ce que**
la tension (U) est une tension continue ou une tension alternative.

4. Procédé selon la revendication 2 ou 3,
**caractérisé en ce que**
le contact de palpeur (4) analyse la grandeur caractéristique électrique en un emplacement derrière un frein de boyau (7) et/ou en un emplacement devant le frein de boyau (7) dans la direction d'expulsion.

5. Procédé selon l'une au moins des revendications 1 à 4,
**caractérisé en ce que**
en tant que grandeur caractéristique électrique (Uₓ, Rₓ, Iₓ) est déterminée une tension qui chute au contact de palpeur (4) de l'enveloppe de saucisse 3 enfilée et du tube de remplissage (2).

6. Procédé selon la revendication 5,
**caractérisé en ce que**
la grandeur caractéristique électrique (Uₓ, Rₓ, Iₓ) captée est comparée à une valeur seuil (S).

7. Procédé selon la revendication 6,
**caractérisé en ce que**
lorsque la grandeur caractéristique électrique (Uₓ, Rₓ, Iₓ) captée dépasse la valeur seuil (S) ou passe en dessous de celle-ci, est généré un signal d'arrêt qui stoppe le processus de remplissage.

8. Procédé selon l'une au moins des revendications précédentes,
**caractérisé en ce que**
lorsque est déterminée en tant que grandeur caractéristique électrique (Uₓ, Rₓ, Iₓ) une résistance (Rₓ) infiniment grande ou une tension (Uₓ) correspondante ou un courant (Iₓ) correspondant, est émis un signal qui indique qu'il existe une erreur de contact de palpeur.

9. Dispositif pour exécuter le procédé selon la revendication 1, comportant un tube de remplissage (2) pour expulser de la substance pâteuse dans une enveloppe de saucisse (3), comprenant :
un équipement capteur (5) pour capter une grandeur caractéristique électrique (Uₓ, Rₓ, Iₓ) pour l'enveloppe de saucisse (3) enfilée sur le tube de remplissage (2) et
une unité d'exploitation (8) qui détermine s'il existe un éclatement d'enveloppe de saucisse et/ou une fin d'enveloppe de saucisse sur la base de la grandeur caractéristique électrique (Uₓ, Rₓ, Iₓ)
**caractérisé en ce que**
l'équipement capteur (5) comprend un contact de palpeur (4) qui repose sur l'enveloppe de saucisse (3), une tension étant appliquée entre le contact de palpeur (4) et le tube de remplissage (2).

10. Procédé selon la revendication 8,
**caractérisé en ce que**
l'équipement capteur (5) est conçu de telle façon qu'en tant que grandeur caractéristique électrique peut être captée une résistance (Rₓ), une tension (Uₓ) ou une intensité de courant (Iₓ) correspondante.

11. Procédé selon la revendication 10,
**caractérisé en ce que**
le contact de palpeur (4) est disposé dans la direction d'expulsion en un emplacement derrière un frein de boyau (7) et/ou devant le frein de boyau (7).

12. Procédé selon l'une au moins des revendications 10 ou 11,
**caractérisé en ce que**
le contact de capteur (4) est réalisé sous forme de contact par friction.

13. Procédé selon l'une des revendications 10 à 12,
**caractérisé en ce que**
le dispositif présente par ailleurs un châssis de machine (10) mis à la terre, le tube de remplissage (2) est en contact conducteur avec le châssis de machine (10), de sorte que le potentiel négatif du châssis de machine (10) sert de potentiel de référence pour la tension de mesure.

14. Procédé selon l'une au moins des revendications 8 à 13,
**caractérisé en ce que**
l'équipement de capteur (5) présente un autre contact conducteur (12) avec le tube de remplissage (2).

15. Procédé selon l'une au moins des revendications 8 à 14,
**caractérisé en ce que**
l'unité d'exploitation (8) émet un signal d'arrêt qui stoppe le processus de remplissage lorsqu'un éclatement d'enveloppe de saucisse et/ou une fin de boyau est capté.

16. Procédé selon l'une au moins des revendications 8 à 15,
**caractérisé en ce que**
l'équipement capteur (5) comprend un diviseur de tension, de sorte qu'en tant que grandeur électrique caractéristique est déterminée la tension (Uₓ) qui chute au contact de palpeur (4) et au tube de remplissage (2).

17. Procédé selon l'une au moins des revendications 8 à 16,
**caractérisé en ce que**
l'unité d'exploitation (8) a mémorisé au moins une valeur seuil (Sₙ), l'unité d'exploitation (8) comparant la valeur caractéristique électrique (Uₓ, Rₓ, Iₓ) à la valeur seuil (Sₙ).

18. Procédé selon l'une au moins des revendications 13 à 17,
**caractérisé en ce que**
le dispositif comprend par ailleurs un afficheur (9) qui affiche si une enveloppe de saucisse est en bon état ou non, et ce en fonction de la grandeur caractéristique (Uₓ, Rₓ, Iₓ) mesurée.
